# EUROPEAN PATENT APPLICATION

(11) **EP 0 862 315 A1**
(43) Date of publication of application: **02.09.1998**
(21) Application number: 98400397.0
(22) Date of filing: 19.02.1998
(51) Int. Cl.: H04N 1/00

(54) **Facsimile sending device, facsimile receiving device, and corresponding methods**

(30) Priority: 28.02.1997 FR 9702431
(71) Applicant: CANON RESEARCH CENTRE-FRANCE S.A., 35517 Cesson Sevigne Cedex (FR)
(72) Inventor: Delumeau, François, 35000 Rennes (FR)
(74) Representative: Rinuy, Santarelli

(57) **Abstract**

The invention proposes a facsimile sending device, adapted to send successively, on a telephone line:
- so-called "preliminary" information including so-called "non-standard" information (NSC) left at the free disposal of facsimile machine manufacturers, and then
- "image" information.

According to the invention, this device has:
- unexpected event detection means, and
- a memory adapted to store an identifier of a predetermined facsimile receiving device, an identifier associated with a said event.

It is adapted, as soon as a said event is detected (420), and it is available to that effect, to send (440), to the receiving device possessing the said identifier associated with the detected event, preliminary information including, as non-standard information, so-called "event" information representing the detected event.

## Description

The present invention relates to a facsimile sending device, a facsimile receiving device, a facsimile sending method and a facsimile receiving method.

It applies in particular to facsimile machines, alarms, home automation and more generally to the remote transmission of information.

Facsimile machines known at present are adapted only to the transmission of information representing images or intended to be associated with them. Their application is therefore limited to this type of data. On the other hand, systems for communicating information of known type, such as alarms, and more generally surveillance systems, use dedicated protocols. Furthermore, these systems require both a specific sender and a specific receiver capable of receiving and processing the transmitted information.

The present invention intends to remedy these drawbacks by presenting devices and methods implementing a modified facsimile transmission protocol. These devices and methods thus transmit information which does not necessarily represent images.

According to a first aspect, the present invention relates to a facsimile sending device, having an information sending means adapted, during a facsimile transmission procedure, to send successively, on a telephone line:
- so-called "preliminary" information including so-called "non-standard" information left at the free disposal of facsimile machine manufacturers, then
- so-called "image" information including image-representing information associated with predetermined facsimile protocol information,
characterised in that it has:
- unexpected event detection means, and
- a memory adapted to store an identifier of a predetermined facsimile receiving device, an identifier associated with a said event,
and in that the sending means are adapted, as soon as a said event is detected, and they are available to that effect, to send, to the receiving device possessing the said identifier associated with the detected event, preliminary information including, as non-standard information, so-called "event" information representing the detected event.

Correlatively, according to a second aspect, the present invention relates to a facsimile sending method, including, during a facsimile transmission procedure:
- a so-called "preliminary" sending step, during which, on a telephone line, so-called "preliminary" information is sent, including so-called "non-standard" information left at the free disposal of facsimile machine manufacturers, and then
- a so-called "image" sending step, during which, on the said telephone line, so-called "image" information is sent, including image-representing information associated with predetermined protocol information,
characterised in that it has
- a step of associating an event with an identifier of a facsimile receiving device,
- an event detection step, during which the occurrence of an unexpected event is detected,
and when the said event is detected and a sending step can be implemented,
- a so-called "dialling" step during which communication is entered into with the receiving device possessing the identifier associated with the detected event, and then
- a so-called "event" sending step during which the said preliminary information is sent, with, as non-standard information, so-called "event" information representing the detected event.

By virtue of these provisions, a device normally intended to transmit information representing an image or intended to be associated with image-representing information is used to transmit, to a predetermined destination, information representing an event detected by a sensor.

For example, a maintenance service, a facsimile machine supplier or a consumables supplier can in this way remotely, and possibly automatically, control facsimile machines installed on the premises of clients. For example, from a remote site, they can in this way:
- monitor certain parameters of a facsimile machine installed on the premises of a client (number of faxes sent or received, quantity of ink remaining in the reserve, etc)
- obtain statistics on the occurrence of certain problems (paper jam, etc)
- improve an after sales service ("just in time" delivery of ink cartridges, paper, etc), or
- receive an alarm signal.

This is because, each time the said facsimile machine detects an event concerning those items of information mentioned which warrant calling upon the supplier, for example so that resupplying of consumables, maintenance, an intervention or a repair are performed, it transmits event information to the facsimile machine of this supplier.

According to particular characteristics, in the sending device as briefly disclosed above, the sending means are adapted to release the telephone line connecting the said sending device to the receiving device associated with the detected event, after having sent the said event information, without having sent any image-representing information associated with said protocol information.

Correlatively, according to particular characteristics, in the sending method as briefly disclosed above, following the said event sending step, a telephone line release step is performed, without an image sending step having taken place.

By virtue of these provisions, the duration of the complete event information transmission procedure is much reduced, since it is even shorter than a facsimile transmission procedure with no image to be transmitted.

According to particular characteristics, in the sending device as briefly disclosed above, the sending means are adapted to send image-representing information not associated with said protocol information, after having sent the said event information.

Correlatively, according to particular characteristics, in the sending method as briefly disclosed above, during the event sending step, an operation of sending image-representing information not associated with said protocol information is performed.

By virtue of these provisions, the said image-representing information can be transmitted according to a specific protocol, for example one adapted to the transmission of video images.

According to particular characteristics, in the sending device as briefly disclosed above, the sending means are adapted to send image-representing information associated with said protocol information, after having sent the said event information.

Correlatively, according to particular characteristics, in the sending method as briefly disclosed above, after the event sending step, a step of sending image-representing information associated with said protocol information is performed.

By virtue of these provisions, the said event information can be supplemented by image information transmitted according to a facsimile procedure.

According to particular characteristics:
- the sending device as briefly disclosed above has an ink reservoir intended for the printing of images on an image medium, and the said event detection means have a sensor adapted to detect that the level of ink in the said reservoir is below a predetermined level,
- the sending device as briefly disclosed above has a means for estimating a number of facsimile sending procedures performed by the sending means, the memory being adapted to store a predetermined number of facsimile sendings, and the event detection means are adapted to detect that the estimated number of sending procedures is greater than or equal to the said predetermined number of sendings, - the sending device as briefly disclosed above has a means for estimating a number of facsimile receiving procedures performed by the sending means, the memory being adapted to store a predetermined number of facsimile receptions, and the event detection means are adapted to detect that the estimated number of receiving procedures is greater than or equal to the said predetermined number of receptions,
- the sending device as briefly disclosed above has a means for estimating a number of malfunctions, the memory being adapted to store a predetermined number of tolerated malfunctions, and the event detection means are adapted to detect that the estimated number of malfunctions is greater than or equal to the said predetermined number of malfunctions,
- the sending device as briefly disclosed above has a means for estimating a number of so-called "sending" jams of media of images intended to be sent, the memory being adapted to store a predetermined number of tolerated sending jams, and the event detection means are adapted to detect that the estimated number of sending jams is greater than or equal to the said predetermined number of sending jams, and/or
- the sending device as briefly disclosed above has a means for estimating a number of so-called "receiving" jams of received image media, the memory being adapted to store a predetermined number of tolerated receiving jams, and the event detection means are adapted to detect that the estimated number of receiving jams is greater than or equal to the said predetermined number of receiving jams.

Correlatively, according to particular characteristics:
- the sending method as briefly disclosed above includes a step of estimating the level of ink in an ink reservoir, and, during the said event detection step, it is detected that the ink level estimate is below a predetermined ink level,
- the sending method as briefly disclosed above includes a step of estimating a number of facsimile sending procedures already performed, and, during the said event detection step, it is detected that the estimated number of sending procedures is greater than or equal to a predetermined number of sendings,
- the sending method as briefly disclosed above includes a step of estimating a number of facsimile receiving procedures already performed, and, during the said event detection step, it is detected that the estimated number of receiving procedures is greater than or equal to a predetermined number of receptions,
- the sending method as briefly disclosed above includes a step of estimating a number of malfunctions, and, during the said event detection step, it is detected that the estimated number of malfunctions is greater than or equal to the said predetermined number of malfunctions,
- the sending method as briefly disclosed above includes a step of estimating a number of so-called "sending" jams of media of images intended to be sent, and, during the said event detection step, it is detected that the estimated number of sending jams is greater than or equal to a predetermined number of sending jams,
   and/or
- the sending method as briefly disclosed above includes a step of estimating a number of so-called "receiving" jams of received image media, and, during the said event detection step, it is detected that the estimated number of receiving jams is greater than or equal to a predetermined number or receiving jams.

By virtue of these provisions, many operating parameters of the facsimile sending device can be remotely monitored.

According to particular characteristics, in the sending device as briefly disclosed above, the event detection means have a sensor adapted to detect an intrusion into a so-called "under surveillance" area.

Correlatively, according to particular characteristics, in the sending method as briefly disclosed above, during the said event detection step, an intrusion into a so-called "under surveillance" area is detected.

By virtue of these provisions, the invention allows the remote transmission of alarm information, on a telephone line, both to a surveillance centre and to a security department or the police.

According to particular characteristics, the sending device as briefly disclosed above has a receiving means adapted to receive control information, by means of a telephone line, and in that the sending means is adapted to send the said event information only when the said control information has been received by the receiving means of the sending device.

Correlatively, according to particular characteristics, the sending method as briefly disclosed above includes a receiving step during which control information is received by means of a telephone line, and in that the said step of sending the said event information is performed only when the said receiving step has taken place.

By virtue of these provisions, the sending device and the sending method to which the invention relates can be implemented remotely by the use of a telephone line.

According to a third aspect, the present invention relates to a facsimile receiving device, having a facsimile receiving means adapted, during a facsimile receiving procedure, to receive successively from a sending device and by means of a telephone line:
. so-called "preliminary" information, including so-called "non-standard" information left at the free disposal of facsimile machine manufacturers, and then
. so-called "image" information including image-representing information associated with predetermined protocol information,
characterised in that:
- it has a preliminary information analysis means adapted to detect, amongst the said preliminary information, as non-standard information, so-called "event" information representing a predetermined event, and
- the receiving means are adapted to release the telephone line as soon as the said event information is detected by the analysis means.

Correlatively, according to a fourth aspect, the present invention relates to a facsimile receiving method, including, during a facsimile receiving procedure:
- a so-called "preliminary" receiving step, during which so-called "preliminary" information is received, including so-called "non-standard" information left at the free disposal of facsimile machine manufacturers, by means of a telephone line, from a facsimile sending device, and then
- a so-called "image" receiving step during which so-called "image" information is received, including image; representing information associated with predetermined protocol information, on the said telephone line,
characterised in that it includes:
- a preliminary information analysis step during which, amongst the said preliminary information, as non-standard information, so-called "event" information representing a predetermined event is detected, and
- if the said event information is detected, a telephone line release step.

By virtue of these provisions, the duration of the complete event information transmission procedure is much reduced, since it is even shorter than a facsimile transmission procedure with no image to be transmitted.

According to particular characteristics, in the facsimile receiving device as briefly disclosed above, the analysis means are adapted to detect, amongst the non-standard information, image-representing information not associated with said protocol information, after the said event information.

Correlatively, in the facsimile receiving method as briefly disclosed above, during the analysis step, amongst the non-standard information, image-representing information not associated with said protocol information is detected, after the said event information.

By virtue of these provisions, image information can be transmitted in addition to the event information, without having to use the part of the facsimile transmission protocol which applies to the transmission of information signals associated with the above-mentioned protocol signals.

According to particular characteristics, the receiving device as briefly disclosed above has a printing means adapted to print, on a visual medium, information representing:
- an identifier of the said facsimile sending device,
- an identifier of the event detected by the facsimile sending device, and/or
- a time of reception of the said event information.

Correlatively, according to particular characteristics, the receiving method as briefly disclosed above includes a user identifier printing step during which there is printed, on a visual medium, information representing:
- an identifier of the facsimile sending device,
- an identifier of the detected event, and/or
- a time of reception of the said event information.

By virtue of these provisions, a report concerning the detected event is printed.

According to particular characteristics, the receiving device as briefly disclosed above has a sending means adapted to send control information to the said facsimile sending device, by means of a telephone line, the said sending device being able to send the said event information only when the said control information has been sent by the sending means of the receiving device.

Correlatively, according to particular characteristics, the receiving method as briefly disclosed above includes a so-called "control" sending step during which, by means of a telephone line, control information is sent to the said facsimile sending device, the said sending device being able to send the said event information only when the said control information has been sent.

By virtue of these provisions, the sending device and the sending method which the invention relates to can be implemented remotely by the use of a telephone line.

The invention also relates to a network,
characterised in that it has:
- at least one telephone line,
- a facsimile sending device as briefly disclosed above, and
- a facsimile receiving device as briefly disclosed above, the said event information sent by the sending means of the sending device being the event information detected by the analysis means of the receiving device.

Since this network has the same advantages as those disclosed above, they will not be repeated here.

The invention will become clearer in the light of the description which follows, given with reference to the accompanying drawings in which:
- Figure 1 depicts a telephone network to which a sending device according to the present invention and a receiving device according to the present invention are connected;
- Figure 2 depicts a page printed by the receiving device presented with reference to Figure 1;
- Figure 3 depicts a simplified electronic diagram of an electronic circuit incorporated in the sending device;
- Figure 4 depicts an operating algorithm for the sending device;
- Figure 5 depicts a simplified electronic diagram of an electronic circuit incorporated in the receiving device;
- Figure 6 depicts an operating algorithm for the receiving device.

It should be noted, firstly, that, in the remainder of the description, a device which initiates a communication procedure will be referred to as a "sending device" even if, in the course of the procedure, it receives signals. Correlatively, in the remainder of the description, a device which does not initiate the communication procedure will be referred to as a "receiving device" even if, in the course of the procedure, it sends signals to the sending device.

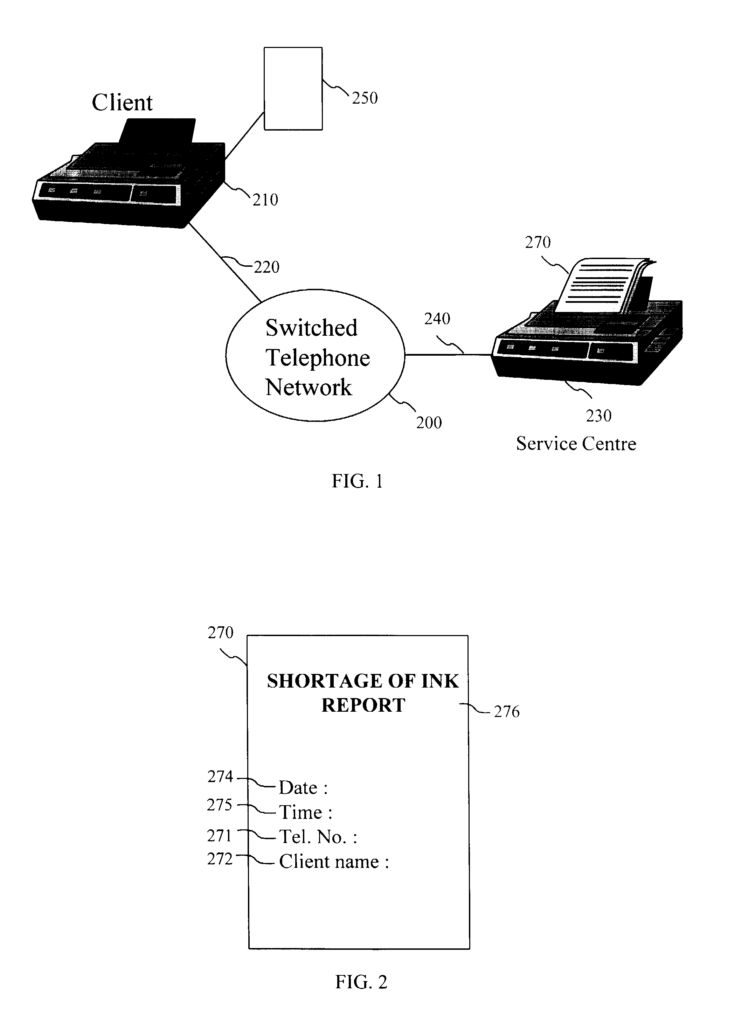

Figure 1 depicts a telephone network 200 to which are connected a sending device 210, by means of a telephone line 220, and a receiving device 230, by means of a telephone line 240. An external event sensor 250 is connected to the sending device 210.

In the embodiment described and depicted, the external event sensor 250 is a premises surveillance station which detects any possible intrusion into these premises, according to techniques known to persons skilled in the art. This sensor 250 is adapted to send an alarm signal to the sending device 210 when it detects an intrusion.

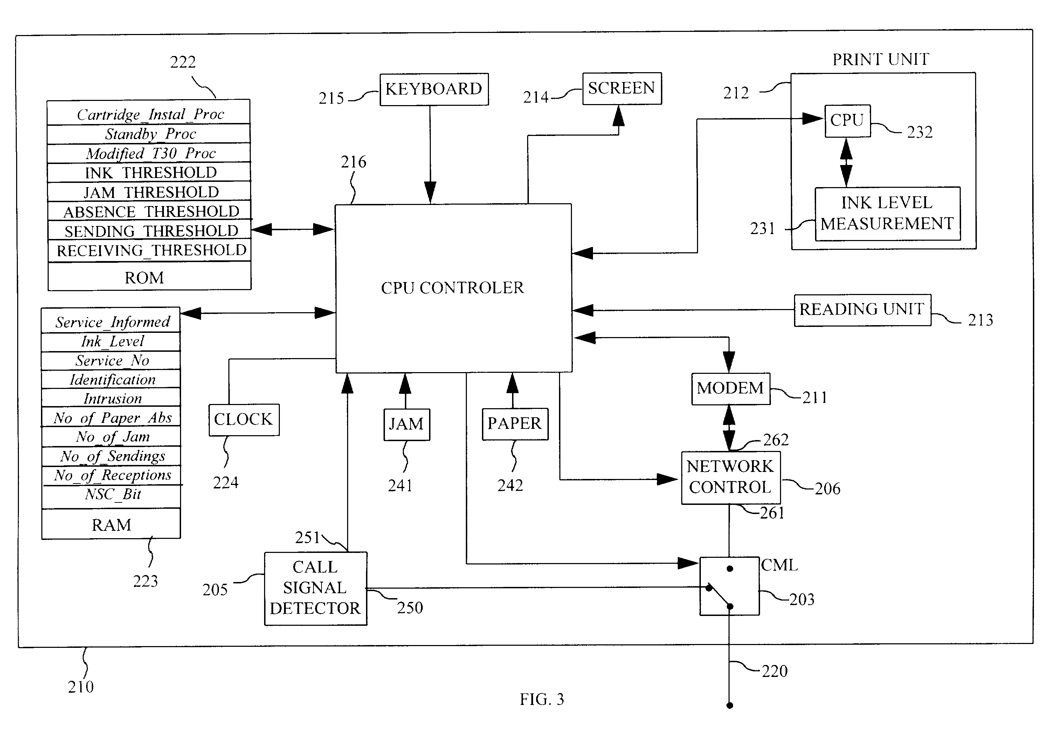

The sending device 210 also has internal event sensors, which detect respectively paper absence, paper jam, facsimile sending and reception, and shortage of ink, and which are described with reference to Figure 3.

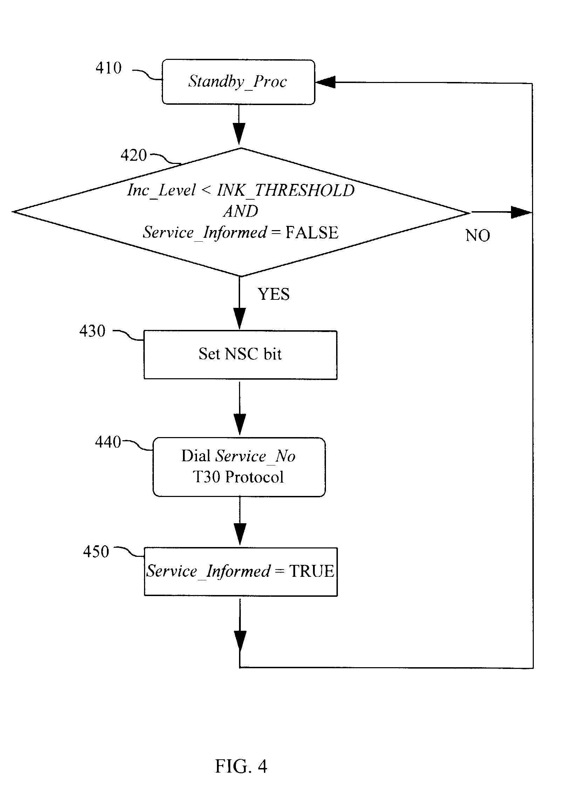

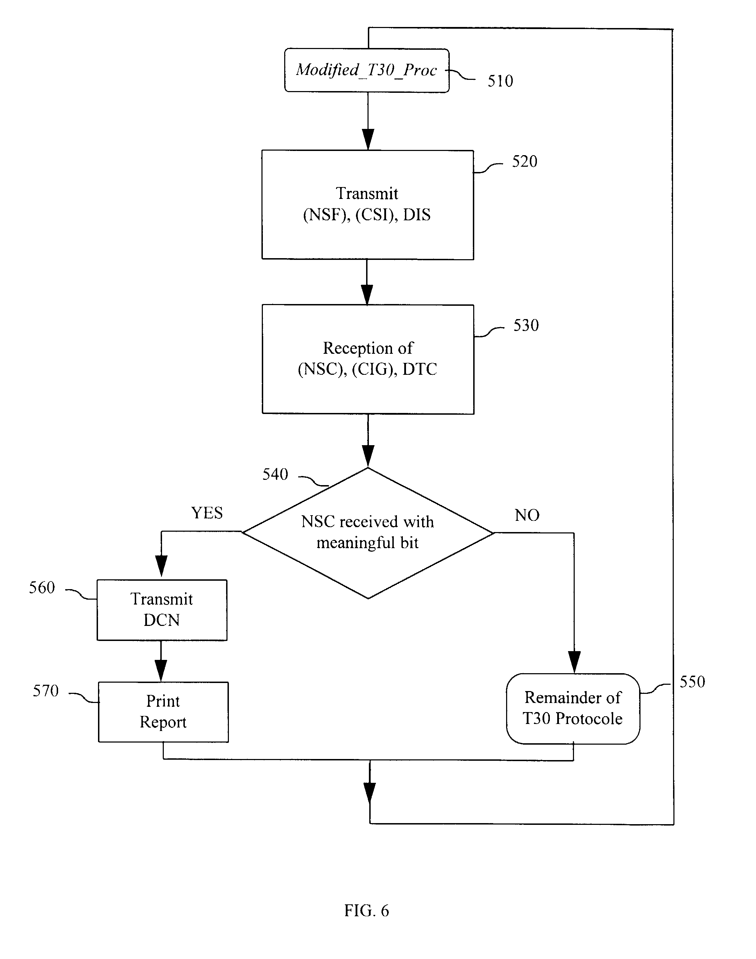

The operation of the sending and receiving devices is detailed below, with reference to Figures 4 and 6.

Figure 2 illustrates a message reception report 270 composed of a page printed by the receiving device 230. In the embodiment described and depicted, this report bears the following particulars:
- the identification of the sending device (the identification stored in memory of the sending device 210 (see Figure 3), for example here the number 271 of the telephone line to which it is connected and the name 272 of the client),
- the date 274 of reception of the message,
- the time 275 of reception of the message, and
- the type 276 of event detected.

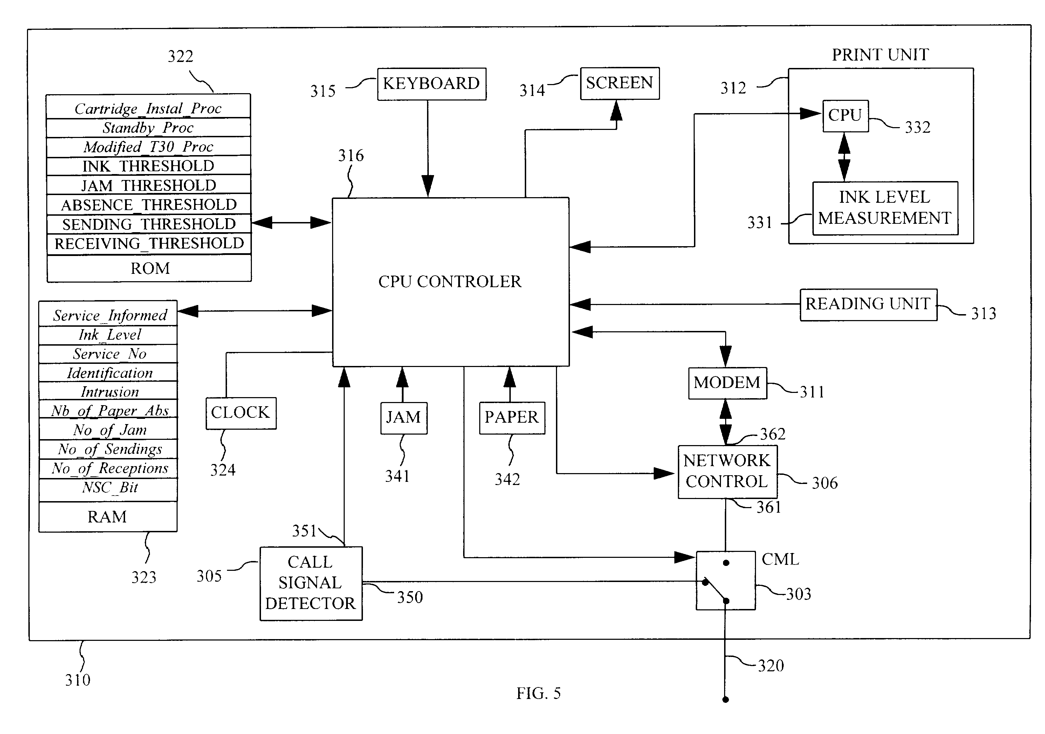

Figure 3 depicts a device according to the invention, incorporated in a facsimile machine 210 connected to a telephone line 220 and implementing the method according to the invention. In this Figure 3, characteristic elements necessary for the operation of the device according to the invention are found:
- calculation means 216, for example composed of a microcontroller;
- storage means comprising a random access memory 223 and a read-only memory 222, connected to the calculation means 216. In the random access memory 223, the following are stored:
   - the number *Service_No* of the telephone line 240, the number to be dialled when a predetermined event is detected, in the form of the occurrence of a predetermined succession of states of one of the sensors presented below, this number corresponding to the receiving device 230 presented with reference to Figure 5,
   - the variables *Service Informed, Ink_Level, Identification, Intrusion, No_of_Paper_Absences, No_of_Jams, No_of_Jams, No_of_Sendings, No_of_Receptions, NSC_Bit,* in registers which have the same names as the variables they contain.

In the read-only memory 222, the instructions for the calculation means 216 are stored, enabling it to execute the phases described with reference to Figure 3, according to the flow diagrams presented with reference to Figures 5A, 5B, 5C, as well as the constants necessary for the execution of this program, *Cartridge_Instal_Proc, Standby_Proc, Modified_T30_Proc,* INK_THRESHOLD, JAM_THRESHOLD, INK_THRESHOLD, ABSENCE_THRESHOLD, SENDING_THRESHOLD, RECEIVING_THRESHOLD, in memory registers having the same names as the constants they store.
- a clock 224 connected to the calculation means 216, for example composed of a clock generator and a frequency divider, supplying electrical pulses to the calculation means 216;
- an internal paper absence sensor 242, of a type known in the copier field, and
- an internal paper jam sensor 241, this also of a type known in the copier field.

In addition, the facsimile machine 210 has elements of known type, necessary for its operation and all connected electrically to the calculation means 216:
- a reading unit 213 intended to read the documents of which a representation is to be transmitted on the telephone line 220 by conventional techniques;
- a printing unit 212 intended to reproduce the documents received on this telephone line and having a processing unit 232 and a level sensor 231 (this sensor capable of being of any known type, static or dynamic, for example of gauge type);
- a keyboard 215 intended to receive commands from the user and a screen 214 intended to display operational messages of the facsimile machine 210;
- a modulator/demodulator 211, referred to as a "modem" in the remainder of the description;
- a relay 203 known by the name CML, intended to switch an electrical connection between the telephone line 220 and either an input 250 of a call signal detector 205 or an input 261 of a network control means 206. The position of this CML relay 203 is controlled by the calculation means 216;
- the incoming call signal detector 205 intended to detect a call signal known by the name "CI" coming from the telephone network 220, by means of the CML relay 203, and consequently to deliver a signal on its output port 251;
- the network control means 206, intended to implement, in a conventional manner, the electrical interface between certain other elements of the facsimile machine 210 and the telephone line 220.

The operation of the device of Figure 3 will now be described with reference to Figure 4.

The procedure described with reference to Figure 4 can only be activated during a standby procedure 410, when the sending device 210 is in a standby state, that is to say when it is neither sending nor receiving signals. This standby procedure, referenced *"Standby Proc"* and stored in read-only memory 222, is of known type. It is in particular adapted to initiate a send or receive facsimile transmission.

In the embodiment described and depicted, at the time of the facsimile sending and receiving procedures: - at each sending of a facsimile page, the register *No_of_Sendings* in the random access memory 223 is incremented,
- at each reception of a facsimile page, the register *No_of_Receptions* in the random access memory 223 is incremented,
- at each paper jam detected in the path of the images intended to be sent, detected by the jam sensor 241 placed on this path, part of the register *No_of_Jams,* the part corresponding to the numbers of jams related to sending, is incremented,
- at each paper jam detected in the path of the received image media, detected by the jam sensor 241 placed on this path, part of the register *No_of_Jams,* the part corresponding to the numbers of jams related to receiving, is incremented, and
- at each paper absence detected by the paper absence sensor 242, the register *No_of*_*Paper_Absences* is incremented.

In addition, the procedure *Standby_Proc* regularly performs the test 420 which consists of determining whether an event from amongst the following events has occurred:
- detection of an intrusion by the premises surveillance station, giving rise to the reception of an alarm signal from the sensor 250;
- ratio of the part of *No_of_Jams* which corresponds to the jams related to sending divided by *No_of_Sendings* greater than JAM_THRESHOLD (this signifying a malfunction of the sheet driving mechanism or a bad choice of sheets used in the path of the sheets carrying images to be sent);
- ratio of the part of *No_of_Jams* which corresponds to the jams related to receiving divided by *No_of_Receptions* greater than JAM_THRESHOLD (this signifying a malfunction of the sheet driving mechanism or a bad choice of sheets used in the path of the sheets intended to carry received images);
- ratio of *No_of_Paper_Absences* divided by *No_of_Sendings* + *No_of_Receptions* greater than ABSENCE_THRESHOLD (this signifying either a malfunction of the paper absence detector, or poor use of the reserve by the client);
- No_of_Sendings greater than SENDING_THRESHOLD (this possibly leading to servicing of all or some of the sending device functions by a maintenance service, for example in order to check that no point of the image sensor is damaged or obscured);
- *No_of_Receptions* greater than RECEIVING_THRESHOLD (this possibly leading to servicing of all or some of the sending device functions by a maintenance service, for example in order to check that the drums and drive rollers are in a fit state for a new series of a number of receptions equal to RECEIVING_THRESHOLD);
- *Ink_Level* less than INK_THRESHOLD.

For reasons of clarity, in Figure 4, the test 420 includes only a reference to this last test, being aware that many other parameters, including those mentioned above, are preferentially monitored by the facsimile sending device of the invention.

The test 420 consists of calculating the ratios defined above, comparing the thresholds with the corresponding stored or calculated values, and comparing the alarm or ink level signals with predetermined signals.

When the result of the test 420 is positive, that is to say when one of the events detailed above has occurred, the operation 430 is carried out. When the result of the test 420 is negative, that is to say when none of the events detailed above has occurred, the calculation means 216 return to the standby procedure 410.

The operation 430 consists of giving, to a particular command of a predetermined frame of the T30 facsimile transmission protocol, known by the name "NSC" by persons skilled in the art of facsimile machines, a predetermined value representing the event detected during the test 420. The bit train corresponding to this command is referenced by the name "NSC", initials from the words "Non-Standard Facilities Command". The value of this bit train is left at the disposal of each manufacturer so that this manufacturer gives it the meaning he wishes, at the beginning of a facsimile transmission procedure.

After the operation 430, the operation 440 consists of initiating a facsimile start protocol information sending procedure:
- dialling, on the telephone line 220, the number *Service_No* of the telephone line 240 of the receiving device 230 of a service centre,
- receiving the frames known by persons skilled in the art by the names "NSF" (initials of the words "Non-Standard Facilities"), "CSI" (initials of the words "Called Subscriber Identification") representing the receiving device identification, and "DIS" (initials of the words "Digital Identification Signal") representing a digital operation identification signal,
- sending the frame known by persons skilled in the art by the name "NSC", this frame, or bit train, having a meaning representing the detected event, in accordance with the description of the operation 430.

The operation 450 consists of giving the logical value "true", here the binary value "1", to the variable *Service_Informed* in the random access memory 223. The calculation means 216 then return to the standby procedure 410.

It should be noted that, in accordance with general characteristics of the sending device according to the present invention, the facsimile sending device 210 has an information sending means composed of the modem 211, the controller 216 and the memories 222 and 223. This sending means is adapted, during a facsimile transmission procedure, to send successively, on a telephone line:
- so-called "preliminary" information including notably: . the optional NSC frames, including so-called "non-standard" information, left at the free disposal of facsimile machine manufacturers, and CIG frames including information identifying the calling sending device and its user, and
   . the DTC frame, including digital transmission command information,
   and then
- so-called "image" information including image-representing information associated with predetermined facsimile protocol information.

In accordance with the invention, this sending device has:
- unexpected event detection means described with reference to Figure 3, and the external event sensor 250 (Figure 1), and
- the random access memory 323, which stores an identifier *Service_No* of the predetermined facsimile receiving device 270, an identifier and receiving device associated with a said event, knowing that each event type can be associated with an identifier and a specific receiving device.

As soon as an unexpected event is detected, and they are available to that effect, the sending means send, to the receiving device possessing the identifier associated with the detected event, preliminary information including, as non-standard information, so-called "event" information representing the detected event.

Thus, in the event of detection of an event, such as a malfunction, an alarm, or a number of transmissions performed, the sending device, also referred to as the "client facsimile machine", dials the prerecorded number *Service_No* corresponding to the service centre, for example the maintenance service of the company which is the user of the sending device, or corresponding to a supplier of professional services. Then the sending device starts up the communication protocol after having set, in a frame in which the information is left, according to the facsimile protocol, at the free disposal of facsimile machine manufacturers, at least one predetermined meaningful bit representing the event under consideration.

The continuation of the information transmission procedure is described with reference to Figure 6.

Figure 5 depicts the simplified electronic diagram of an electronic circuit incorporated in the receiving device 230. The elements of Figure 3 are found again here, with the exception of the detectors 241 and 242, the processing unit 232 and the level sensor 231.

In the read-only memory ROM 322 there is stored a program according to the T30 protocol modified in accordance with the invention (see Figure 6): *Modified_T30_Proc.*

In the random access memory RAM 323, a register *"NSC"* stores the possible values of the NSC frame bit train and the meanings associated with these possible values.

In Figure 6, it should be noted that the receiving device operates by implementing a T30 protocol modified in accordance with the present invention, that is to say modified solely to take into account, during a receiving procedure, the value of the NSC frame. During the operation 510, which corresponds to the start of a receiving procedure, the calculation means 316 process the first signals received from the sending device 210, according to the procedures of the above-mentioned T30 protocol.

During the operation 520, the receiving device 230 transmits, to the sending device 210, the frames known by the names NSF, CSI and DIS (see above).

During the operation 530, the receiving device 230 receives, from the sending device 210, the frames known by the names NSC, CIG and DTC (see above).

During the test 540, the calculation means 316 determine whether the value of the received NSC frame bit train corresponds to the occurrence of a predetermined event.

Where the result of the test 540 is negative, during the operation 550, the calculation means 316 implement a T30 protocol with no modification, and then return, at the end of the receiving procedure, to the operation 510.

Where the result of the test 540 is positive, during the operation 560, the receiving device 230 transmits a frame known by the name "DCN" (initials from the word "Disconnect"), a frame which signifies the end of the receiving procedure and the release by the facsimile sending device, and by the facsimile receiving device, of the telephone line by means of which they were communicating.

Next, during the operation 570, the receiving device prints the message reception report 270 presented with reference to Figure 2, using the information contained in the frame known to persons skilled in the art by the name "CIG".

The receiving device 230 returns, at the end of the operation 570, to a standby procedure.

Thus, in accordance with general characteristics of the receiving device according to the present invention, the facsimile receiving device 270 has a facsimile receiving means composed of the modem 311, the controller 316 and the memories 322 and 323.

This receiving means is adapted, during a facsimile receiving procedure, to receive successively from a sending device and by means of a telephone line:
. so-called "preliminary" information, including so-called "non-standard" information left at the free disposal of facsimile machine manufacturers, and then
. so-called "image" information including image-representing information associated with predetermined protocol information.

The receiving device has a preliminary information analysis means, composed of the controller 316 and the memories 322 and 323, which detect, during the test 540, amongst the preliminary information, as non-standard information in the NSC frame, "event" information representing the predetermined event.

The receiving means then release the telephone line as soon as the said event information is detected by the analysis means.

Thus, as soon as the receiving device 230, also referred to as the "service centre facsimile machine", receives and recognises the value of the train of meaningful bits in the NSC frame which corresponds to the occurrence of an event, it interrupts the communication by following the facsimile interruption protocol. Then the service centre facsimile machine stores, processes, transmits or, in the embodiment described and depicted, prints a reception report identifying the client facsimile machine and the event which has occurred.

A facsimile machine supplier can thus automatically remotely control facsimile machines installed on the premises of clients. For example, from a remote site, the supplier can thus:
- monitor certain parameters of a facsimile machine installed on the premises of a client (number of faxes sent or received, quantity of ink remaining in the reserve, etc),
- obtain statistics on the occurrence of certain problems (paper jam, paper absence, etc) and/or
- improve his after-sales service ("just in time" delivery of ink cartridges, paper, etc).

At the time of intervention of the supplier or the maintenance service, the latter reinitialises the registers in the random access memory 223 of the sending device 210, which are adapted to be incremented.

In the embodiment described and depicted, the sending means release the telephone line connecting the said sending device to the receiving device associated with the detected event, after having sent the said event information, on reception of the DCN frame, without having sent any image-representing information associated with said protocol information.

However, according to variants, not depicted, the facsimile receiving device does not send a DCN frame. The sending means of the facsimile sending device according to the invention can then:
- send image-representing information not associated with said protocol information, after having sent the said event information, or, according to another variant,
- send image-representing information associated with said protocol information, after having sent the said event information.

According to a variant, not depicted, the facsimile receiving device 230 is adapted to send, to the facsimile sending device 210, by means of the telephone lines 220 and 240 and the telephone network 200, enable control information. On receiving this enable control information, the sending device 210 enables the ability to implement the operation described with reference to Figure 4. Of course, after receiving another instance of so-called "disable" control information, by the same means, the facsimile sending device disables the said operation and is not able to send the event information before having again received an instance of control information.

According to another variant, not depicted, the facsimile sending device sends image-representing information not associated with said protocol information, after having sent the said event information. For example, it sends successively, and without waiting for validation signals confirming their correct reception, information representing a video image captured by a surveillance camera constituting an intrusion sensor whose activation causes the start of the sending procedure described in Figure 4, as soon as the sending device is available for this sending procedure.

According to another variant, not depicted, after having sent the NSC frame, the facsimile sending device sends a facsimile to the facsimile receiving device, this facsimile serving, for example, as an event occurrence report.

## Claims

1. Facsimile sending device (210), having an information sending means (211, 216) adapted, during a facsimile transmission procedure, to send successively, on a telephone line:
- so-called "preliminary" information including so-called "non-standard" information (NSC) left at the free disposal of facsimile machine manufacturers, then
- so-called "image" information including image-representing information associated with predetermined facsimile protocol information,
characterised in that it has:
- unexpected event detection means (216, 222, 223, 231, 241, 242, 250), and
- a memory (223) adapted to store an identifier of a predetermined facsimile receiving device (230), an identifier associated with a said event,
and in that the sending means are adapted, as soon as a said event is detected, and they are available to that effect, to send, to the receiving device possessing the said identifier associated with the detected event, preliminary information including, as non-standard information, so-called "event" information representing the detected event.

2. Facsimile sending device (210) according to Claim 1, characterised in that the sending means (211, 216) are adapted to release the telephone line connecting the said sending device to the receiving device associated with the detected event, after having sent the said event information, without having sent any image-representing information associated with said protocol information.

3. Facsimile sending device (210) according to Claim 2, characterised in that the sending means are adapted to send image-representing information not associated with said protocol information, after having sent the said event information.

4. Facsimile sending device (210) according to Claim 1, characterised in that the sending means are adapted to send image-representing information associated with said protocol information, after having sent the said event information.

5. Facsimile sending device (210) according to any one of Claims 1 to 4, characterised in that it has an ink reservoir intended for the printing of images on an image medium, and in that the said event detection means have a sensor (231) adapted to detect that the level of ink in the said reservoir is below a predetermined level.

6. Facsimile sending device (210) according to any one of Claims 1 to 5, characterised in that it has a means for estimating (216, 223) a number of facsimile sending procedures performed by the sending means, the memory (222) being adapted to store a predetermined number of facsimile sendings, and in that the event detection means (216, 222, 223) are adapted to detect that the estimated number of sending procedures is greater than or equal to the said predetermined number of sendings.

7. Facsimile sending device (210) according to any one of Claims 1 to 6, characterised in that it has a means for estimating (216, 223) a number of facsimile receiving procedures performed by the sending means, the memory (222) being adapted to store a predetermined number of facsimile receptions, and in that the event detection means (216, 222, 223) are adapted to detect that the estimated number of receiving procedures is greater than or equal to the said predetermined number of receptions.

8. Facsimile sending device (210) according to any one of Claims 1 to 7, characterised in that it has a means for estimating (216, 223) a number of malfunctions, the memory (222) being adapted to store a predetermined number of tolerated malfunctions, and in that the event detection means (216, 222, 223) are adapted to detect that the estimated number of malfunctions is greater than or equal to the said predetermined number of malfunctions.

9. Facsimile sending device (210) according to any one of Claims 1 to 8, characterised in that the event detection means (216, 222, 223, 250) have a sensor (250) adapted to detect an intrusion into a so-called "under surveillance" area.

10. Facsimile sending device (210) according to any one of Claims 1 to 9, characterised in that it has a means for estimating a number of so-called "sending" jams (216, 223, 241) of media of images intended to be sent, the memory (222) being adapted to store a predetermined number of tolerated sending jams, and in that the event detection means (216, 222, 223) are adapted to detect that the estimated number of sending jams is greater than or equal to the said predetermined number of sending jams.

11. Facsimile sending device (210) according to any one of Claims 1 to 10, characterised in that it has a means for estimating a number of so-called "receiving" jams (216, 223, 241) of received image media, the memory (222) being adapted to store a predetermined number of tolerated receiving jams, and in that the event detection means (216, 222, 223) are adapted to detect that the estimated number of receiving jams is greater than or equal to the said predetermined number of receiving jams.

12. Facsimile sending device (210) according to any one of Claims 1 to 11, characterised in that it has a receiving means (211) adapted to receive control information, by means of a telephone line (220), and in that the sending means (211, 216) is adapted to send the said event information only when the said control information has been received by the receiving means of the sending device.

13. Facsimile receiving device (230), having a facsimile receiving means (311, 316) adapted, during a facsimile receiving procedure, to receive successively from a sending device (210) and by means of a telephone line (240):
. so-called "preliminary" information, including so-called "non-standard" information (NSC) left at the free disposal of facsimile machine manufacturers, and then
. so-called "image" information including image-representing information associated with predetermined protocol information,
characterised in that:
- it has a preliminary information analysis means (316, 322, 323) adapted to detect, amongst the said preliminary information, as non-standard information, so-called "event" information representing a predetermined event, and
- the receiving means are adapted to release the telephone line as soon as the said event information is detected by the analysis means.

14. Facsimile receiving device (230) according to Claim 13, characterised in that the analysis means (316, 322, 323) are adapted to detect, amongst the non-standard information, image-representing information not associated with said protocol information, after the said event information.

15. Facsimile receiving device (230) according to either one of Claims 13 or 14, characterised in that it has a printing means (312) adapted to print, on a visual medium, information (270, 271, 272) representing an identifier of the said facsimile sending device.

16. Facsimile receiving device (230) according to any one of Claims 13 to 15, characterised in that it has a printing means (312) adapted to print, on a visual medium, information (276) representing an identifier of the event detected by the facsimile sending device.

17. Facsimile receiving device (230) according to any one of Claims 13 to 16, characterised in that it has a printing means (312) adapted to print, on a visual medium, information (274, 275) representing a time of reception of the said event information.

18. Facsimile receiving device (230) according to any one of Claims 13 to 17, characterised in that it has a sending means (311) adapted to send control information to the said facsimile sending device, by means of a telephone line (240), the said sending device being able to send the said event information only when the said control information has been sent by the sending means of the receiving device.

19. Network (200), characterised in that it has:
- at least one telephone line (220, 240),
- a facsimile sending device (210) according to any one of Claims 1 to 12, and
- a facsimile receiving device (230) according to any one of Claims 13 to 18,
the said event information sent by the sending means of the sending device being the event information detected by the analysis means of the receiving device.

20. Facsimile sending method, including, during a facsimile transmission procedure:
- a so-called "preliminary" sending step (530), during which, on a telephone line (220), so-called "preliminary" information (NSC, CIG, DTC) is sent, including so-called "non-standard" information (NSC) left at the free disposal of facsimile machine manufacturers, and then
- a so-called "image" sending step, during which, on the said telephone line, so-called "image" information is sent, including image-representing information associated with predetermined protocol information,
characterised in that it has
- a step of associating an event with an identifier of a facsimile receiving device (230),
- an event detection step (420), during which the occurrence of an unexpected event is detected,
and when the said event is detected and a sending step can be implemented,
- a so-called "dialling" step (440) during which communication is entered into with the receiving device possessing the identifier associated with the detected event, and then
- a so-called "event" sending step (530) during which the said preliminary information is sent, with, as non-standard information, so-called "event" information representing the detected event.

21. Facsimile sending method according to Claim 20, characterised in that, following the said event sending step (530), a telephone line release step is performed, without an image sending step having taken place.

22. Facsimile sending method according to Claim 21, characterised in that, during the event sending step (530), an operation of sending image-representing information not associated with said protocol information is performed.

23. Facsimile sending method according to Claim 20, characterised in that, after the event sending step (530), a step of sending image-representing information associated with said protocol information is performed.

24. Facsimile sending method according to any one of Claims 20 to 23, characterised in that it includes a step of estimating the level of ink in an ink reservoir, and in that, during the said event detection step (420), it is detected that the ink level estimate is below a predetermined ink level.

25. Facsimile sending method according to any one of Claims 20 to 24, characterised in that it includes a step of estimating a number of facsimile sending procedures already performed, and in that, during the said event detection step, it is detected that the estimated number of sending procedures is greater than or equal to a predetermined number of sendings.

26. Facsimile sending method according to any one of Claims 20 to 25, characterised in that it includes a step of estimating a number of facsimile receiving procedures already performed, and in that, during the said event detection step, it is detected that the estimated number of receiving procedures is greater than or equal to a predetermined number of receptions.

27. Facsimile sending method according to any one of Claims 20 to 26, characterised in that it includes a step of estimating a number of malfunctions, and in that, during the said event detection step, it is detected that the estimated number of malfunctions is greater than or equal to the said predetermined number of malfunctions.

28. Facsimile sending method according to any one of Claims 20 to 27, characterised in that, during the said event detection step, an intrusion into a so-called "under surveillance" area is detected.

29. Facsimile sending method according to any one of Claims 20 to 28, characterised in that it includes a step of estimating a number of so-called "sending" jams of media of images intended to be sent, and in that, during the said event detection step, it is detected that the estimated number of sending jams is greater than or equal to a predetermined number of sending jams.

30. Facsimile sending method according to any one of Claims 20 to 29, characterised in that it includes a step of estimating a number of so-called "receiving" jams of received image media, and in that, during the said event detection step, it is detected that the estimated number of receiving jams is greater than or equal to a predetermined number of receiving jams.

31. Facsimile sending method according to any one of Claims 20 to 30, characterised in that it includes a receiving step during which control information is received by means of a telephone line (220), and in that the said step of sending the said event information is performed only when the said receiving step has taken place.

32. Facsimile receiving method, including, during a facsimile receiving procedure (520, 530):
- a so-called "preliminary" receiving step (520, 530), during which so-called "preliminary" information (NSC, CIG, DTC) is received, including so-called "non-standard" information (NSC) left at the free disposal of facsimile machine manufacturers, by means of a telephone line (240), from a facsimile sending device (210), and then
- a so-called "image" receiving step during which so-called "image" information is received, including image-representing information associated with predetermined protocol information, on the said telephone line,
characterised in that it includes:
- a preliminary information analysis step (540) during which, amongst the said preliminary information, as non-standard information, so-called "event" information representing a predetermined event is detected, and
- if the said event information is detected, a telephone line release step (560).

33. Facsimile receiving method according to Claim 32, characterised in that, during the analysis step (540), amongst the non-standard information, image-representing information not associated with said protocol information is detected, after the said event information.

34. Facsimile receiving method according to either one of Claims 31 or 32, characterised in that it includes a user identifier printing step (570) during which information representing an identifier of the facsimile sending device is printed on a visual medium.

35. Facsimile receiving method according to either one of Claims 33 or 34, characterised in that it includes an event printing step (570), during which information representing an identifier of the detected event is printed on a visual medium.

36. Facsimile receiving method according to any one of Claims 33 to 35, characterised in that it includes a time printing step (570), during which information representing a time of reception of the said event information is printed on a visual medium.

37. Facsimile receiving method according to any one of Claims 33 to 36, characterised in that it includes a so-called "control" sending step during which, by means of a telephone line, control information is sent to the said facsimile sending device, the said sending device being able to send the said event information only when the said control information has been sent.
